# EUROPÄISCHE PATENTSCHRIFT

(11) **EP 2 855 072 B1**
(45) Veröffentlichungstag und Bekanntmachung des Hinweises auf die Patenterteilung: **13.07.2016**
(21) Anmeldenummer: 13727023.7
(22) Anmeldetag: 28.05.2013
(51) Int. Cl.: B23K 11/087, B23K 11/30

(54) **ROLLENKOPF FÜR EINE WIDERSTANDSSCHWEISSMASCHINE MIT KÜHLMITTELKANÄLEN IM INNEREN EINER LAGERAUSSENHÄUSE ; WIDERSTANDNAHTSCHWEISSMASCHINE MIT EINEM SOLCHEN ROLLENKOPF ; VERFAHREN ZUM WIDERSTANDNAHTSCHWEISEN VON DOSENZARGEN**
ROLLER HEAD FOR A RESISTANCE SEAM WELDING MACHINE WITH COOLANT CHANNELS IN THE INTERIOR OF A BEARING OUTER HOUSING; RESISTANCE SEAM WELDING MACHINE HAVING SUCH A ROLLER HEAD; METHOD FOR RESISTANCE SEAM WELDING OF CAN BODIES
TÊTE DE SOUDAGE À MOLETTE POUR UNE MACHINE DE SOUDAGE PAR RÉSISTANCE EN LIGNE CONTINUE POURVUE DE CANAUX D'AGENT DE REFROIDISSEMENT À L'INTÉRIEUR D'UN BOÎTIER EXTERNE DE PALIER ; MACHINE DE SOUDAGE PAR RÉSISTANCE EN LIGNE CONTINUE POURVUE D'UNE TELLE TÊTE DE SOUDAGE À MOLETTE ; ET PROCÉDÉ DE SOUDAGE PAR RÉSISTANCE EN LIGNE CONTINUE DE CORPS DE BOÎTE

(30) Priorität: 04.06.2012 CH 769122012
(43) Veröffentlichungstag der Anmeldung: 08.04.2015
(73) Patentinhaber: Soudronic AG, 8962 Bergdietikon (CH)
(72) Erfinder: DIETRICH, Daniel, CH-8335 Hittnau (CH)
(74) Vertreter: Schalch, Rainer
(86) Internationale Anmeldenummer: PCT/CH2013/000090
(87) Internationale Veröffentlichungsnummer: WO 2013/181765

(56) Entgegenhaltungen:
- DE-A1- 4 210 974
- DE-C1- 4 020 182
- US-A- 5 420 389

## Beschreibung

Die Erfindung betrifft einen Rollenkopf für eine Widerstandsnahtschweissmaschine gemäss Oberbegriff des Anspruchs 1. Ferner betrifft die Erfindung eine Widerstandsnahtschweissmaschine gemäss Oberbegriff des Anspruchs 7 sowie ein Verfahren für das Widerstandsnahtschweissen mit derartigen Rollenköpfen.

### Stand der Technik

Aus DE-A-40 20 182 C1 ist ein Rollenkopf der eingangs genannten Art bekannt (siehe Oberbegriff des Anspruchs 1). Solche Rollenköpfe haben sich bewährt. Die Standzeit der Rollenköpfe im Betrieb ist wesentlich von den Wälzlagern zwischen Rotor und Stator bestimmt. Diese Lager werden vom Inneren des Rollenkopfs her durch das im Rollenkopf zirkulierende Kühlmittel gekühlt, welches über das Lagerinnengehäuse Wärme vom Lager abführt. Der im Lager vorhandene Schmierstoff altert durch die Betriebstemperaturen beim Schweissen. Mit der Zunahme der Schweissgeschwindigkeit und der damit benötigten höheren Schweissfrequenz steigen die Anforderungen, was verbesserte Schmierstoffe nötig macht. Aus DE-A-42 10 974 ist eine Widerstandsschweissmaschine mit Elektrodenrollen bekannt, bei der die Wälzlager der nebeneinander angeordneten Elektrodenrollen direkt vom Kühlmittel beaufschlagt werden. Die Gleitkontakte für die Stromübertragung werden dahingegen nicht direkt vom Kühlmittel gekühlt. Diese Konstruktion und Anordnung der Elektrodenrollen ist für das Schweissen von Behälterzargen, beim dem ein Rollenkopf im Inneren der Zarge und ein Rollenkopf ausserhalb der Zarge angeordnet sein muss, nicht geeignet.

### Darstellung der Erfindung

Der Erfindung liegt die Aufgabe zu Grunde, einen verbesserten Rollenkopf zu schaffen. Insbesondere soll dieser eine erhöhte Standzeit aufweisen.

Dies wird bei dem Rollenkopf der eingangs genannten Art dadurch erreicht, dass ferner Kühlmittelkanäle im Inneren des Lageraussengehäuses vorgesehen sind, welche mit Kanälen im Stator in Fluidverbindung stehen, siehe Anspruch 1.

Durch die damit erzielte beidseitige Kühlung der Lager kann eine verringerte Lagertemperatur erzielt werden. Eine Aussenkühlung wurde bisher vom Fachmann bei derartigen Rollenköpfen, die beim Schweissen von Dosenzargen eingesetzt werden, nicht in Betracht gezogen. Es zeigt sich aber, dass diese Massnahme deutliche Vorteile bietet und einer Forcierung der reinen Innenkühlung und/oder dem Einsatz höherwertiger Schmierstoffe überlegen ist.

Bevorzugt ist es, dass die Anordnung der Kühlmittelkanäle im Inneren des Lageraussengehäuses mehrere vom Zentrum des Lageraussengehäuses radial nach aussen führende Kühlmittelkanäle umfasst. Vorzugsweise führen diese radialen Kanäle zu einem ringförmigen Kühlmittelkanal im Inneren des Lageraussengehäuses, der sich vom Zentrum des Lageraussengehäuses entfernt im Bereich des äusseren Rands des Lageraussengehäuses befindet. Dies ergibt eine gute Kühlung bei einfacher Herstellbarkeit des Lageraussengehäuses. Insbesondere sind vier oder mehr radial nach aussen führende Kühlmittelkanäle vorgesehen.

Insbesondere ist der Rollenkopf für den Durchfluss des Kühlmittels durch die Kühlmittelkanäle der Lageraussengehäuse so ausgeführt, dass im Stator radiale Kanäle vorgesehen sind, die mit dem Kühlmitteleintritt des Stators und mit den Kühlmittelkanälen des einen Lageraussengehäuses verbunden sind, und dass im Stator von den radialen Kanälen abzweigende axiale Kanäle vorgesehen sind, welche mit den Kühlmittelkanälen des zweiten Lageraussengehäuses verbunden sind, und dass im Stator weitere axiale Kanäle vorgesehen sind, welche mit dem Kühlmittelausgang des Stators und mit weiteren Kühlmittelkanälen der Lageraussengehäuse in Verbindung stehen. Damit ergibt sich eine kompakte Anordnung von Kanälen zur Zuführung des Kühlmittels in die Lageraussengehäuse und zur Abfuhr des Kühlmittels aus den Lageraussengehäusen.

Insbesondere ist der Rollenkopf so ausgeführt dass die Gleitkontakt-Stromübertragungseinrichtung direkt gekühlt wird, wozu die Gleitkontaktscheiben Kühlmittelkanäle aufweisen.

Die Erfindung betrifft ferner eine Widerstandsnahtschweissmaschine mit einem an einem Oberarm der Maschine angeordneten oberen Rollenkopf und einem an einem Unterarm der Maschine angeordneten unteren Rollenkopf, zwischen welchen Rollenköpfen die Widerstandsnahtschweissmaschine den Pfad für den Durchlauf des Schweissgutes bildet. Solche Widerstandsnahtschweissmaschinen sind bekannt und werden insbesondere zum Schweissen von Dosenzargen eingesetzt. Dabei kommen hohe Schweissgeschwindigkeiten vor.

Die obengenannten Vorteile werden erzielt, indem der obere und der untere Rollenkopf ein Rollenkopf nach einem der Ansprüche 1 bis 6 ist.

Weiter betrifft die Erfindung ein Verfahren zum Widerstandsnahtschweissen der Längsnaht von Dosenzargen mittels zweier Rollenköpfe zwischen denen die Dosenzargen hindurch transportiert werden.

Die erläuterten Vorteile werden dadurch erzielt, dass die Lageraussengehäuse der Rollenköpfe mittels einer Kühlflüssigkeit gekühlt werden, die im Inneren der Lageraussengehäuse zirkuliert.

### Kurze Darstellung der Zeichnungen

Im Folgenden werden eine Vorrichtung und das Vorgehen nach Stand der Technik und werden Ausführungsbeispiele der Erfindung anhand der Zeichnungen näher erläutert. Dabei zeigen
Figur 1 einen Rollenkopf nach Stand der Technik zur Erläuterung von dessen Aufbau;
Figur 2 eine Seitenansicht auf das Lageraussengehäuse eines Rollenkopfes gemäss der Erfindung mit Darstellung der im Lageraussengehäuse vorgesehenen Kühlmittelkanäle;
Figur 3 einen vereinfacht dargestellten Schnitt durch einen Rollenkopf gemäss der Erfindung entlang der Schnittlinie B-B von Figur 2;
Figur 4 einen vereinfacht dargestellten Schnitt durch einen Rollenkopf gemäss der Erfindung entlang der Schnittlinie A-A von Figur 2; und
Figur 5 grob schematisch das Vorgehen und eine Widerstandsnahtschweissvorrichtung zur Schweissung von Dosenkörpern mit Rollenköpfen gemäss der Erfindung.

### Wege zur Ausführung der Erfindung

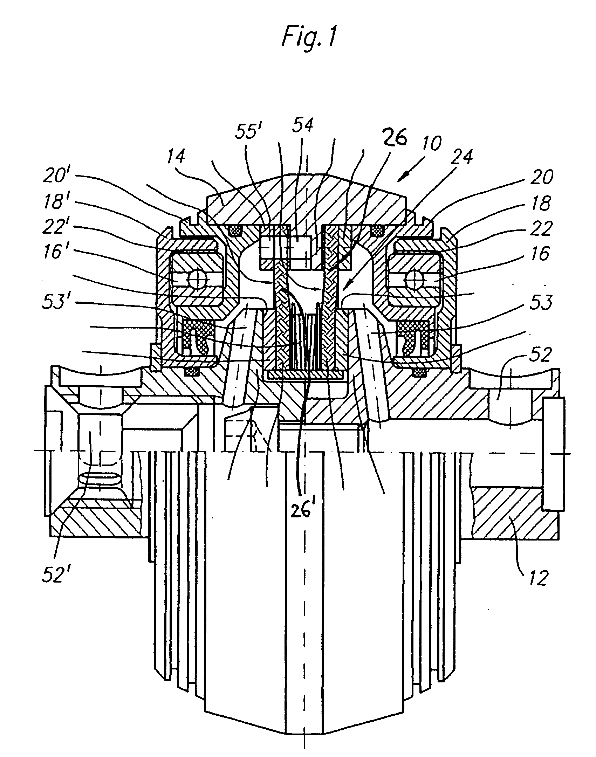

Anhand der Figur 1 wird der Aufbau eines Rollenkopfes nach Stand der Technik, insbesondere gemäss DE 40 20 182 C1 erläutert. Figur 1 zeigt den insgesamt mit 10 bezeichneten Rollenkopf für eine Widerstandsschweissmaschine für das Widerstands-Rollennahtschweissen von Dosenkörpern. Der Rollenkopf 10 ist oberhalb seiner Rotationsachse geschnitten dargestellt und weist in diesem Beispiel einen als zweiteilige Achse ausgebildeten Stator 12 auf, auf dem ein Rotor 14 mittels Wälzlagern 16, 16' drehbar gelagert ist. Gleiche, aber mit einem hochgestellten Strich versehene Bezugszeichen bezeichnen jeweils das andere Teil eines Paares von gleich ausgebildeten Teilen. Für die Lagerung mit den Wälzlagern weist der Rollenkopf 10 am Stator 12 befestigte Lageraussengehäuse 18, 18' sowie am Rotor 14 befestigte Lagerinnengehäuse 20, 20' auf, zwischen denen die Wälzlager 16, 16' (hier als Kugellager dargestellt) angeordnet sind. Die Lageraussen- und Lager-innengehäuse 18, 18' bzw. 20, 20' sind aus nichtrostendem, antimagnetischen Stahl gebildet und sind somit wirbelstromverlustarm. Die Wälzlageraussenringe sind jeweils durch eine Isolation 22, 22' von dem Lageraussengehäuse 18 bzw. 18' elektrisch getrennt. Stattdessen, oder auch zusätzlich, können auch die Wälzlagerinnenringe von den Lagerinnengehäusen 20, 20' durch eine elektrische Isolation getrennt sein.

Der Stator 12 wird an dem freien Ende eines nicht dargestellten Schweissarms einer Widerstandsnahtschweissmaschine elektrisch gut leitend festgeklemmt, wobei für die Schweissung von Dosenzargen ein Unterarm mit einem Rollenkopf und ein Oberarm mit einem Rollenkopf vorgesehen ist, zwischen welchen Rollenköpfen die Schweissung erfolgt, in der Regel unter Verwendung einer Drahtzwischenelektrode, was dem Fachmann bekannt ist und hier nicht weiter erläutert wird. Der Schweissstrom ist vom Stator 12 auf den Rotor 14 zu übertragen, der ihn, vorzugsweise über die genannte Drahtelektrode, zur Schweissstelle überträgt. Zur Stromübertragung zwischen Stator und Rotor ist eine insgesamt mit 24 bezeichnete Gleitkontakt-Stromübertragungseinrichtung vorgesehen, wie sie insbesondere aus DE 40 20 182 C1 bekannt ist, worauf hier verwiesen wird.

Gemäss Stand der Technik ist weiter der Innenraum zwischen dem Stator 12 und dem Rotor 14 auf in Figur 1 dargestellte Weise mittels O-Ringen und Wellendichtungen fluiddicht abgedichtet. Da der Rotor 14 und die Gleitkontaktflächen gekühlt werden müssen, sind zum Hindurchleiten eines flüssigen Kühlmittels durch den Rollenkopf 10 Kanäle 52, 52' und 53, 53' im Stator 12, Kanäle 54 im Rotor 14 und Kanäle 55' in der Gleitkontaktscheibe 26' vorgesehen(den Kanälen 55' entsprechende Kanäle, die in der Scheibe 26 vorgesehen sind, sind in Figur 1 nicht sichtbar). Kühlmittel wird im Betrieb der Widerstandsschweissmaschine über den Ober- bzw. Unterarm der Maschine in den Kanal 52 eingeleitet und strömt durch den Kanal 53, durch die nicht sichtbaren Kanäle der Scheibe 26, durch die Kanäle 54 und 55' und schliesslich durch die Kanäle 53' und 52' zurück in den Ober- bzw. Unterarm.

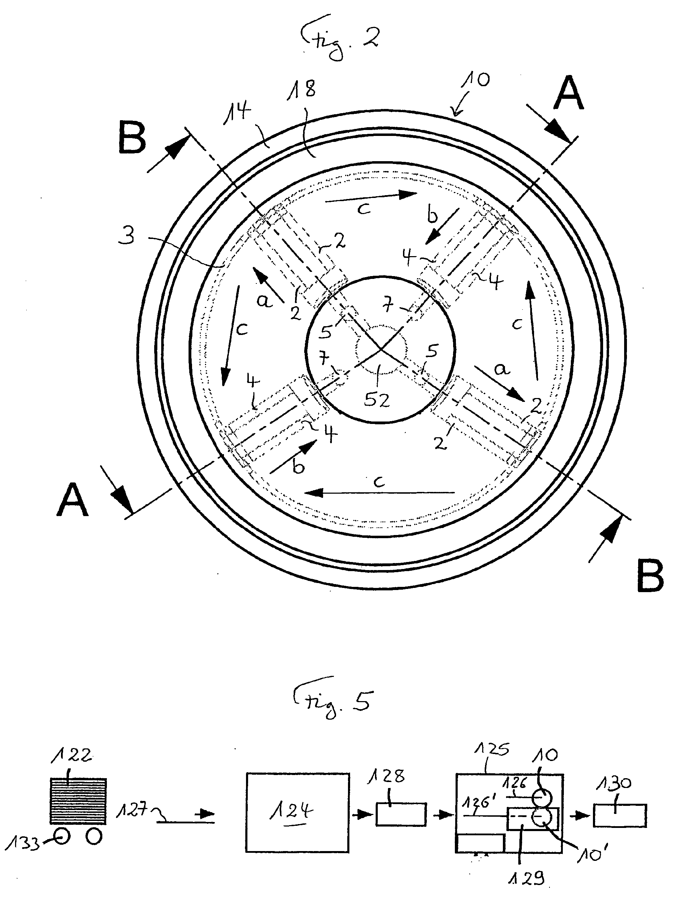

Gemäss der vorliegenden Erfindung werden auch die Lageraussengehäuse 18 und 18' durch das Kühlmittel gekühlt, das durch den Kanal 52 im Stator in den Rollenkopf eintritt und diesen durch den Kanal 52' im Stator wieder verlässt. Dazu sind im Inneren der Lageraussengehäuse 18 und 18' Kühlmittelkanäle angeordnet, was nun an Hand der Figuren 2, 3 und 4 mittels eines bevorzugten Beispiels näher erläutert wird. In diesem Beispiel ist der Rollenkopf 10 gegenüber Figur 1 zum Teil vereinfacht dargestellt. Gleiche Bezugszeichen wie in Figur 1 bezeichnen gleiche oder zumindest funktionsgleiche Elemente des Rollenkopfs.

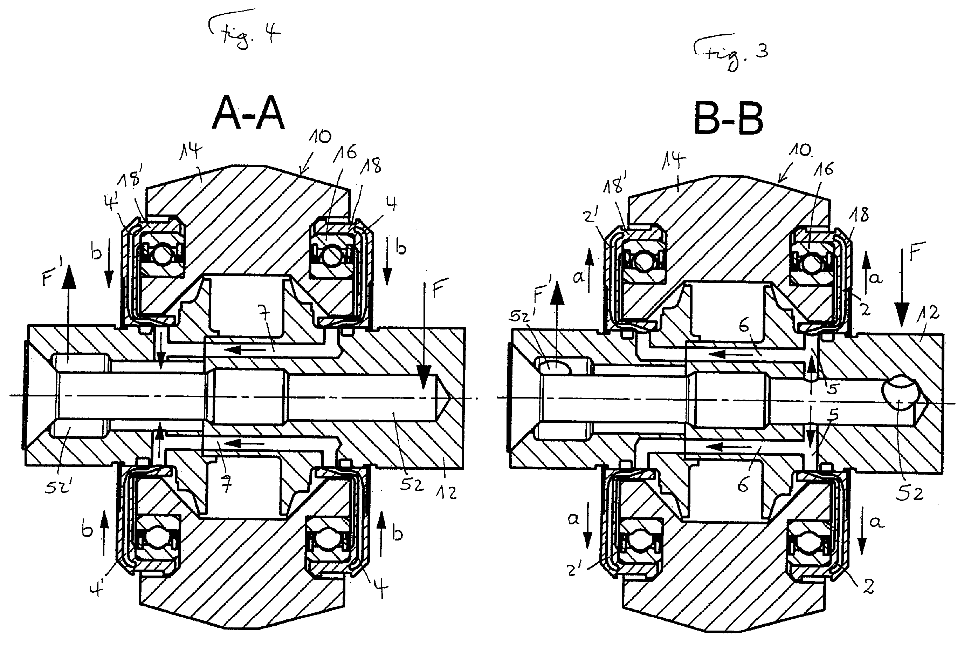

Figur 2 zeigt eine Ansicht auf einen Rollenkopf 10 von der Seite, so dass sich eine Draufsicht auf das Lageraussengehäuse 18 ergibt. Mit unterbrochenen Linien sind die von aussen unsichtbaren Kanäle für die Kühlflüssigkeit im Inneren des Lageraussengehäuses 18 angedeutet sowie auch von aussen unsichtbare Kanäle im Stator 12. Figur 3 zeigt eine Schnittansicht entlang der Schnittlinie B-B von Figur 2 und Figur 4 zeigt die Schnittansicht entlang der Schnittlinie A-A von Figur 2. In Figur 3 ist mit dem Pfeil F der Eintritt von Kühlflüssigkeit in den Kanal 52 des Stators 12 dargestellt. Diese Kühlflüssigkeit wird, wie erwähnt, durch den Schweissarm der Schweissmaschine gefördert, an dem der Rollenkopf festgeklemmt ist. Dies ist bekannt und wird hier nicht weiter erläutert. Auch die Abfuhr der Kühlflüssigkeit, die den Rollenkopf über den Kanal 52' verlässt, was mit dem Pfeil F' symbolisiert ist, wird nicht weiter erläutert. Die Kühlflüssigkeit gelangt im Stator 12 durch die Kanäle 5 zum Eintritt in die Kanäle 2 des Lageraussengehäuses 18. Ferner durch die von den Kanälen 5 abzweigenden Kanäle 6 zum Eintritt in die Kanäle 2' des Lageraussengehäuses 18'. Die Kanäle 52 und 54 im Stator 12 sind - wie in Figur 1 - gegeneinander flüssigkeitsdicht verschlossen. Es ergibt sich der in Figur 2 und in Figur 3 mit den Pfeilen dargestellte Fluss der Kühlflüssigkeit vom Stator 12 in die Lageraussengehäuse 18 und 18' und im Lageraussengehäuse selber der Fluss durch die Kanäle 2 vom Zentrum nach aussen zum äusseren Rand der Lageraussengehäuse hin, wie das in Figur 2 und in Figur 3 für das Lageraussengehäuse 18 mit den Pfeilen a dargestellt ist bzw. für das Lageraussengehäuse 18' in Figur 3 mit den Pfeilen a' gezeigt ist. Ein nur in Figur 2 ersichtlicher, bevorzugt ringförmiger, Kanal 3 ist im Lageraussengehäuse 18 vorgesehen (und auch im Lageraussengehäuse 18') und ist beabstandet vom Zentrum 7 des Lageraussengehäuses angeordnet und wird von den Kanälen 2 und 2' gespiesen. Von diesem Kanal 3 aus erfolgt der Rückfluss der Kühlflüssigkeit (Pfeile c) zum Ausgang 52' im Stator. Die Kühlflüssigkeit fliest dazu zunächst durch die Kanäle 4 und 4' in den Lageraussengehäusen 18 und 18' (Pfeile b) zum Zentrum jedes Lageraussengehäuses. Der Schnitt entlang der Schnittlinie A-A von Figur 2 bzw. Figur 4 zeigt dies. Kanäle 7 im Stator 12 leiten die Kühlflüssigkeit vom Zentrum der Lageraussengehäuse 18, 18' in den Kanal 52' im Stator. Von dort wird die Kühlflüssigkeit über den Schweissarm abgeführt, was bekannt ist und hier nicht weiter erläutert wird.

Die Herstellung der Lageraussengehäuse 18, 18' mit den darin angeordneten Kanälen kann auf verschiedene Weise erfolgen. Eine bevorzugte Art der Herstellung ist ein schichtweiser Aufbau aus einem metallischen Pulverwerkstoff mittels Lasersintern, was unter dem Fachbegriff "generative metal forming (GMF)" bekannt ist. Mittels des Lasers werden nach und nach Schichten (von z.B. 20 Mikrometern Dicke) reliefartig aufgebaut, womit die gezeigte oder eine andere Kanalstruktur beim Aufbau des Lageraussengehäuses in diesem vorgesehen werden kann. Ebenfalls möglich ist ein Aufbau des Lageraussenghäuses aus mehreren separat zugeschnittenen Schichten eines Metallmaterials, die aufeinander gelegt miteinander verbunden werden. Die mindestens eine mittlere Schicht bildet dann mit ihren Ausnehmungen die Kanäle. Eine solche Schicht kann z.B. mit einem Laserschneidwerkzeug oder mittels Funkenerosion zugeschnitten werden. Die Schichten können durch Schweissung (z.B. Reibschweissung und Elektronenstrahlschweissen) flächig und an den Rändern verbunden werden.

Figur 5 zeigt grob schematisch eine Widerstandsnahtschweissmaschine 125, mittels welcher Dosenkörper 128, 129, 130 geschweisst werden. Dies ist dem Fachmann grundsätzlich geläufig und wird hier nur kurz erläutert. Von einem Stapel 122, der z.B. auf einem Transportwagen 133 angeordnet ist, werden einzelne Bleche abgestapelt und einem Rundapparat 124 zugeführt. In der Figur ist das Blech 127 als Beispiel gezeigt. Im Rundapparat 124 wird das Blech gerundet und verlässt den Rundapparat als Dosenkörper 128, dessen längs verlaufende Überlappnaht noch offen ist und nachfolgend in der Widerstandsnahtschweissmaschine 125 geschweisst werden soll. Dazu sind die Rollenköpfe 10 und 10' vorgesehen, welche erfindungsgemässe Rollenköpfe mit gekühltem Lageraussengehäuse sind. Der obere Rollenkopf 10 ist dabei an dem nur angedeuteten Oberarm 126 der Schweissmaschine 125 befestigt, der untere Rollenkopf 10' am nur angedeuteten unteren Schweissarm 126'. Über diese Schweissarme wird auf bekannte Weise jeder Rollenkopf mit der Kühlflüssigkeit versorgt bzw. die erwärmte Kühlflüssigkeit wird über den Schweissarm abgeführt. Mittels der Rollenköpfe wird die Zarge 129 geschweisst (in der Regel unter Verwendung einer Drahtzwischenelektrode, wie beim Schweissen von Dosenkörpern üblich). Der vorgängig geschweisste Dosenkörper ist mit 130 bezeichnet.

## Patentansprüche

1. Rollenkopf für eine Widerstandsnahtschweissmaschine, mit einem Stator (12), mit einer Elektrodenrolle, die als Rotor (14) an dem Stator (12) mittels Wälzlagern (16, 16')drehbar gelagert ist, wozu mit dem Rotor (14) verbundene Lagerinnengehäuse (20, 20') und mit dem Stator (12) verbundene Lageraussengehäuse (18, 18') vorgesehen sind, mit einer Gleitkontakt-Stromübertragungseinrichtung (24), die zwischen Stator und Rotor angeordnet ist, und mit Kanälen zum Hindurchleiten eines Kühlmittels, durch Stator, Rotor und die Lagerinnengehäuse (20, 20'), **dadurch gekennzeichnet, dass** ferner Kühlmittelkanäle (2, 2', 3, 4, 4') im Inneren der Lageraussengehäuse (18, 18') vorgesehen sind, welche mit Kanälen (5, 6, 7) im Stator (12) in Fluidverbindung stehen.

2. Rollenkopf nach Anspruch 1, **dadurch gekennzeichnet, dass** die Kühlmittelkanäle im Inneren der Lageraussengehäuse (18, 18') mehrere vom Zentrum jedes Lageraussengehäuses radial nach aussen führende Kühlmittelkanäle (2, 2', 4, 4') umfassen.

3. Rollenkopf nach Anspruch 2, **dadurch gekennzeichnet, dass** die Kühlmittelkanäle im Inneren der Lageraussengehäuse (18, 18') jeweils einen ringförmigen Kühlmittelkanal (3) im Inneren des Lageraussengehäuses umfassen, welcher im äusseren Randbereich jedes Lageraussengehäuses (18, 18') verläuft und in welchen die radial nach aussen führenden Kühlmittelkanäle münden.

4. Rollenkopf nach Anspruch 2 oder 3, **dadurch gekennzeichnet, dass** vier oder mehr radial nach aussen führende Kühlmittelkanäle vorgesehen sind.

5. Rollenkopf nach einem der Ansprüche 1 bis 4, **dadurch gekennzeichnet, dass** im Stator (12) radiale Kanäle (5) vorgesehen sind, die mit dem Kühlmitteleintritt (52) des Stators (12) und mit den Kühlmittelkanälen (2) des einen Lageraussengehäuses (18) verbunden sind, und dass im Stator (12) von den radialen Kanälen (5) abzweigende axiale Kanäle (6) vorgesehen sind, welche mit den Kühlmittelkanälen (2') des zweiten Lageraussengehäuses (18') verbunden sind, und dass im Stator (12) weitere axiale Kanäle (7) vorgesehen sind, welche mit dem Kühlmittelausgang (52') des Stators (12) und mit weiteren Kühlmittelkanälen (4, 4') der Lageraussengehäuse (18, 18') in Verbindung stehen.

6. Rollenkopf nach einem der Ansprüche 1 bis 5, **dadurch gekennzeichnet, dass** die Gleitkontakt-Stromübertragungseinrichtung (24) Gleitkontaktscheiben (26, 26') mit Kühlmittelkanälen (55') aufweist.

7. Widerstandsnahtschweissmaschine (125) mit einem an einem Oberarm (126) der Maschine angeordneten oberen Rollenkopf (10) und einem an einem Unterarm (126') der Maschine angeordneten unteren Rollenkopf (10), zwischen welchen Rollenköpfen der Durchlauf des Schweissgutes erfolgt, **dadurch gekennzeichnet, dass** der obere und der untere Rollenkopf ein Rollenkopf nach einem der Ansprüche 1 bis 6 ist.

8. Verfahren zum Widerstandsnahtschweissen der Längsnaht von Dosenzargen mittels zweier Rollenköpfe nach einem der Ansprüche 1 bis 6, zwischen denen die Dosenzargen hindurch transportiert werden, **dadurch gekennzeichnet, dass** die Lageraussengehäuse der Rollenköpfe mittels einer Kühlflüssigkeit gekühlt werden, die im Inneren der Lageraussengehäuse zirkuliert.

## Claims

1. Roller head for a resistance seam welding machine, with a stator (12), with an electrode roll which is rotatably supported as rotor (14) on the stator (12) by means of roller bearings (16, 16'), for which purpose inner bearing casings (20, 20') connected to the rotor (14) and outer bearing casings (18, 18') connected to the stator (12) are provided, with a sliding-contact-current-transmitting-device (24) arranged between the stator and the rotor, and with channels for guiding a coolant through the stator, the rotor and the inner bearing casings (20, 20'), **characterized in that** furthermore coolant channels (2, 2', 3, 4, 4') are provided inside the outer bearing casings (18, 18'), which have a fluid connection with channels (5, 6, 7) in the stator (12).

2. Roller head according to claim 1, **characterized in that** the coolant channels comprise inside the outer bearing casings (18, 18') a plurality of coolant channels (2, 2', 4, 4') extending radially outwards from the center of each outer bearing casing.

3. Roller head according to claim 2, **characterized in that** the coolant channels each comprise inside the outer bearing casings (18, 18') an annular coolant channel (3) inside the outer bearing casings (18, 18'), which extends in the outer peripheral area of each outer bearing casing (18, 18') and into which the radially outwards extending coolant channels open.

4. Roller head according to claim 2 or 3, **characterized in that** four or more radially outwards extending coolant channels are provided.

5. Roller head according to one of the claims 1 to 4, **characterized in that** radial channels (5) are provided in the stator (12), which are connected to the coolant inlet (52) of the stator (12) and to the coolant channels (2) of the one outer bearing casing (18), and **in that** axial channels (6) branching off from the radial channels (5) are provided in the stator (12), which are connected to the coolant channels (2') of the second outer bearing casing (18'), and **in that** further axial channels (7) are provided in the stator (12), which are connected to the coolant outlet (52') of the stator (12) and to the further coolant channels (4, 4') of the outer bearing casings (18, 18').

6. Roller head according to one of the claims 1 to 5, **characterized in that** the sliding-contact-current-transmitting-device (24) has sliding contact disks (26, 26') with coolant channels (55').

7. Resistance seam welding machine (125) with an upper roller head (10) arranged on an upper arm (126) of the machine and a lower roller head (10) arranged on a lower arm (126') of the machine, between which roller heads the goods to be welded pass through, **characterized in that** the upper and the lower roller heads are a roller head according to one of the claims 1 to 6.

8. Method for resistance seam welding of the longitudinal seam of can bodies by means of two roller heads according to one of the claims 1 to 6, between which the can bodies are passed through, **characterized in that** the outer bearing casings of the roller heads are cooled by coolant circulating inside the outer bearing casing.

## Revendications

1. Tête à rouleau pour une machine à souder par résistance en ligne continue, comprenant un stator (12), avec un rouleau-électrode logé de façon à pouvoir tourner sous forme d'un rotor (14) sur le stator (12) à l'aide des paliers à roulement (16, 16'), des carcasses de palier intérieures (20, 20') connectées avec le rotor (14) et des carcasses de palier extérieures (18, 18') connectées avec le stator (12) étant prévues, avec un dispositif (24) de conduction de courant à contact glissant arrangé entre le stator et le rotor, et avec des canaux pour le passage d'un fluide de refroidissement à travers le stator, le rotor et la carcasse de palier intérieure (20, 20'), **caractérisée en ce que** de plus des canaux de fluide de refroidissement (2, 2', 3, 4, 4') sont prévus à l'intérieur de la carcasse de palier extérieure (18, 18'), qui ont une connexion fluidique avec les canaux (5, 6, 7) dans le stator (12).

2. Tête à rouleau selon la revendication 1, **caractérisée en ce que** les canaux de fluide de refroidissement comprennent à l'intérieur de la carcasse de palier extérieure (18, 18') plusieurs canaux de fluide de refroidissement (2, 2', 4, 4') qui mènent à partir du centre de chaque carcasse de palier extérieure radialement vers l'extérieur.

3. Tête à rouleau selon la revendication 2, **caractérisée en ce que** les canaux de fluide de refroidissement comprennent à l'intérieur de la carcasse de palier extérieure (18, 18') chaque un canal de fluide de refroidissement (3) annulaire à l'intérieur de la carcasse de palier extérieure, qui s'étend dans la zone périphérique de chaque carcasse de palier extérieure (18, 18') et dans lequels les canaux de fluide de refroidissement qui mènent radialement vers l'extérieur débouchent.

4. Tête à rouleau selon la revendication 2 ou 3, **caractérisée en ce que** quatre ou plusieurs canaux de fluide de refroidissement qui mènent radialement à l'extérieur sont prévus.

5. Tête à rouleau selon l'une des revendications 1 à 4, **caractérisée en ce que** des canaux radiaux (5) sont prévus dans le stator (12), qui sont connectés avec l'entrée (52) de fluide de refroidissement du stator (12) et avec les canaux de fluide de refroidissement (2) de l'une carcasse de palier extérieure (18), et **en ce que** des canaux axiaux (6) sont prévus dans le stator (12), qui bifurquent à partir des canaux radiaux (5), qui sont connectés avec les canaux de fluide de refroidissement (2') de la deuxième carcasse de palier extérieure (18'), et **en ce que** des autres canaux axiaux (7) sont prévus, qui sont connectés avec la sortie de fluide de refroidissement (52') du stator (12) et avec d'autres canaux de fluide de refroidissement (4, 4') de la carcasse de palier extérieure (18, 18').

6. Tête à rouleau selon l'une des revendications 1 à 5, **caractérisée en ce que** le dispositif (24) de conduction de courant à contact glissant a des disques à contact glissant (26, 26') avec des canaux de fluide de refroidissement (55').

7. Machine à souder par résistance en ligne continue (125) avec une tête à rouleau supérieure (10) arrangée sur un bras supérieur (126) de la machine et avec une tête à rouleau inférieure (10) arrangée sur un bras inférieur (126') de la machine, entre lesquelles têtes à rouleau le passage des objets à souder s'effectue, **caractérisée en ce que** la tête à rouleau supérieure et inférieure sont une tête à rouleau selon l'une des revendications 1 à 6.

8. Procédé pour le soudage par résistance en ligne continue du cordon de soudure longitudinal des corps de boîtes à l'aide de deux têtes à rouleau selon l'une des revendications 1 à 6, entre lesquelles les corps de boîte sont passés, **caractérisé en ce que** la carcasse de palier extérieure des têtes à rouleau sont refroidies par un fluide de refroidissement qui circule à l'intérieur de la carcasse de palier extérieure.
